Europäisches Patentamt

European Patent Office

Office européen des brevets

(19)

(11) Publication number: **0 373 642**
**A2**

# EUROPEAN PATENT APPLICATION

(12)

(21) Application number: 89123097.1

(22) Date of filing: **14.12.89**

(51) Int. Cl.5: **B29D 1/00, B29C 67/14,**
**B29C 53/58, F16B 33/00**

(30) Priority: **16.12.88 US 285483**

(43) Date of publication of application:
**20.06.90 Bulletin 90/25**

(84) Designated Contracting States:
**AT BE CH DE ES FR GB GR IT LI LU NL SE**

(71) Applicant: **The B.F. Goodrich Company**
**3925 Embassy Parkway**
**Akron Ohio 44313(US)**

(72) Inventor: **Moghe, Sharad Ramchandra**
**7489 Dorwick Drive**
**Northfield Center Ohio 44067(US)**

(74) Representative: **von Kreisler, Alek,**
**Dipl.-Chem. et al**
**Patentanwälte Von Kreisler-Selting-Werner**
**Deichmannhaus am Hauptbahnhof**
**D-5000 Köln 1(DE)**

(54) **Composite nut and bolt.**

(57) A hollow composite internally threaded member
such as a nut includes a reinforcing fabric layer such
as a braided or knit layer extending in the axial
direction of the member and conforming to its
threads. A method of making such an internally
threaded member comprises forming and embed-
ding in a polymeric matric a reinforcing fabric layer
on an externally threaded cylindrical core and there-
after removing the core. Such internally threaded
member may be threadedly joined and adhesively
bonded to an externally threaded member of complementary thread pitch and thread diameter to form
a bolt. The externally threaded member may com-
prise an elongate core having an integral tubular
fabric layer bonded to its exterior surface.

EP 0 373 642 A2

# COMPOSITE NUT AND BOLT

This invention relates to reinforced threaded plastic members such as nuts and bolts, and more particularly threaded composite members which are reinforced with fibers extending in multiple directions and to methods of making same.

## BACKGROUND OF THE INVENTION

Fiber-reinforced polymeric resin composite materials are now widely used due to their outstanding strength to weight characteristics. These characteristics are especially important in the aircraft industry. Currently, structural components of these composite materials are joined to one another or to structural composites of the airframe employing other materials such as conventional metallic fasteners or adhesives. Conventional metallic mechanical fasteners are unsatisfactory for several reasons. They are subject to a weight penalty and are susceptible to galvanic corrosion. Vibrations encountered during normal flight conditions and severe loading as experienced in storms or emergency maneuvers may result in failure of the fastener to the composite structure joint. Adhesively bonded joints cannot be readily disassembled for service and maintenance.

While attempts to solve the aforestated deficiencies have been made using composite plastic fasteners, these earlier efforts have not been widely adopted due to economic or technical shortcomings.

For example, U.S. Patent 3,495,494 to A.L. Scott discloses a threaded plastic member having a glass fiber reinforced thread in which a plurality of resin impregnated glass fiber reinforcing filaments are disposed in serpentine manner throughout the cross section of the thread and extending longitudinally of the axis of the threaded member. Manufacture of the threaded member requires a precision mold having a cavity complementary to that of the member to be formed. According to Scott, nuts may be formed by curing a plurality of resin-impregnated filaments laid axially about a rod having complementary threads and thereafter unscrewing the rod from the molding and cutting the molding into a plurality of nuts. To form the head on a bolt, one of these nuts is screwed onto one end of the shank molding and cemented into place.

U.S. Patent 4,478,544 to Strand discloses a reinforced plastic rivet formed of carbon fibers encapsulated in an incompletely polymerized thermoset resin matrix. To use the rivet, its head portion is heated to soften the resin, the head is upset and fully polymerized. As with all rivets, this one is not threaded. This rivet has the further disadvantage of needing to be stored in a controlled low temperature environment prior to use to prevent premature setting of the resin.

U.S. Patent 2,306,516 to Zahn discloses the use of a parting medium or membrane, such as rubber, over a threaded fastener which functions as a pattern to manufacture a hollow casting mold.

U.S. Patent 4,389,269 to Cooper et al discloses a sport racket frame construction and a method of making same. A resin-impregnated tow is wound about part of a braided tow tube and thereafter a second braided tow tube is placed thereon to form an assembly that is internally pressurized and heat cured.

U.S. Patent 4,265,981 to Campbell discloses impact resisting composites which may comprise multiple parallel filaments helically wrapped by continuous multiple filaments or strips and embedded in a matrix material.

It is evident from the foregoing that a need remains for a threaded composite fastener that may be made economically in the absence of expensive molds and exhibits physical characteristics similar to modern composite materials such as those employed in aerospace applications and in harsh chemical environments.

## SUMMARY OF THE INVENTION

According to an aspect of the present invention, there is provided a method of making a hollow composite internally threaded member comprising: providing an elongate externally threaded cylindrical core, which is treated with a release agent; forming on the core a reinforcing fabric layer enveloping the core and conforming to the threads of the core; embedding the reinforcing fabric layer in a polymeric matrix.

According to another aspect of the invention, there is provided a hollow internally threaded member formed of fibers in a polymer matrix, said member having an interior surface having an integral thread having a rounded apex, said thread including a reinforcing fabric layer extending in the axial direction of the member and conforming to the threads.

According to a further aspect of the invention, there is provided in combination a hollow internally threaded member formed of fibers in a polymeric matrix, said member having an interior surface having an integral thread having a rounded apex, said thread including a reinforcing fabric layer extending in the axial direction of the member and conforming to the threads, said hollow internally threaded member being threadedly joined to an externally threaded member of complementary thread pitch and thread diameter, said externally threaded member comprising an elongate core and an integral tubular layer of textile fabric bonded to the exterior surface of the core, said integral textile layer being selected from one of continuous woven, continuous knit or continuous braided textile material, the textile layer enveloping, conforming and bonded with polymeric matrix to the exterior of the polymeric core.

There is no restriction on the type of fiber or matrix which may be employed.

The elongate externally threaded cylindrical core may be solid or hollow. The elongate threaded cylindrical core may itself be a composite member. The core may contain a helical thread defining element which contains a fibrous reinforcement or may be defined by a bundle of filaments, a braided or twisted cord or a polymeric matrix alone or in combination with one of the foregoing. The core may include a braided layer thereon in which at least one element of greater radial projection relative to the core than the remainder of the elements forming the braided layer is included, the element of greater radial projection defining a helical thread on the core.

The reinforcing fabric layer of the hollow internally threaded member may be braided or knit. Heat and pressure may be applied subsequent to formation of the reinforcing fabric layer to effect consolidation of the fabric layer and associated polymeric matrix with the underlying threaded core. Provision of a release coating on the core prior to formation of the hollow internally threaded member enables separation of the completed internally threaded member from the core on which it is formed. No mold is required external of the internally threaded member. The assembly upon the previously formed threaded core may be completed by curing/consolidating the fabric reinforced matrix internal threaded member upon the molding core in an autoclave.

The above and other features and advantages of the invention will become more apparent from the following detailed description and appendant claims taken in conjunction with the accompanying drawings in which like reference numbers are used to refer to like parts, which together form a part of the specification.

## BRIEF DESCRIPTION OF THE DRAWINGS

Figure 1 is a flow chart depicting schematically in solid lines a preferred process and in dashed lines process variations and alternatives for the manufacture of certain embodiments of threaded composite members according to the present invention.

Figure 2a is a side elevational schematic view of an externally threaded cylindrical core for use in manufacturing an internally threaded member according to the invention.

Figure 2b is a side elevational schematic view depicing formation of a reinforcing fabric layer of an internally threaded member according to the invention.

Figure 2c is a side elevational view of a completed internally threaded member according to the present invention with the externally threaded core partly withdrawn.

Figure 2d is a side elevational view of an internally threaded member according to the invention cut from the member shown in Figure 2c.

Figure 2e is a side elevational view of a hex nut according to the present invention.

Figure 2f is a side elevational view of a composite bolt according to the present invention.

Figure 2g is a sectional view taken along lines 2g-2g of Figure 2f.

Figure 3 is a cross-sectional view of a preferred thread forming element useful in the invention.

Figure 4 is a cross-sectional view of a preferred non-thread forming element useful in the invention.

Figure 5 is an isometric view of an alternate embodiment of an externally threaded member according to the present invention.

Figure 6A is a side view and Figure 6B is a perspective view with parts broken away of an externally threaded composite member made in accordance with the present invention.

Figures 7A and 7B are respectively an end-on schematic and a side view schematic depicting manufacture of an externally threaded member according to the present invention.

Figures 8A and 8B are respectively a prospective view and a side view with parts broken away of an embodiment of an externally threaded composite member made in accordance with the present invention.

Figures 9A and 9B together form a flow chart depicting schematically in solid lines a preferred process and in dashed lines process variations and alternatives for the manufacture of certain embodiments of externally threaded composite members according to the present invention.

Figure 10 is a side view partial schematic of manufacture of the externally threaded member of the present invention.

Figure 11 is an isometric view with parts broken away of a further embodiment of a threaded member according to the present invention.

## DETAILED DESCRIPTION OF THE INVENTION

As used herein, the terms having, including, comprising and containing are synonymous. Unless otherwise specified at the point of use, all percentages, fractions and ratios in this specification, including the claims appended thereto, are on a weight basis. The term "rod" as used herein means a slender bar and may be hollow or solid. The term "pitch" and related forms as used herein means the distance from any point on the helical thread of a thread member to the corresponding point on the adjacent thread formed by that same helical member measured parallel to the longitudinal axis of the threaded member. The term "helix angle" as used herein means the acute angle formed by the path of a thread-defining helical element and the axial or lengthwise direction of the threaded member. A higher helix angle corresponds to a smaller pitch for threaded members of equal diameter and thread defining element radial projection. In the present specification and including its accompanying drawing, like numbers are used to refer to like features or members.

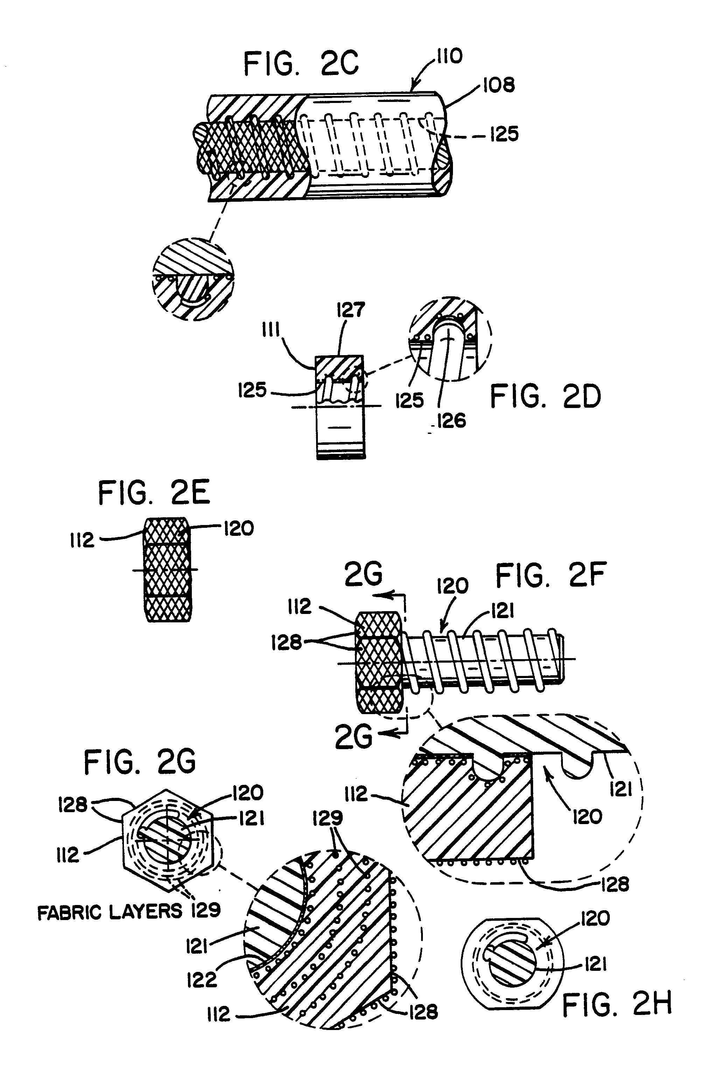

In Figures 2c, 2d, and 2e there are shown embodiments of internally threaded members 110, 111, and 112 respectively according to the invention. Hollow internally threaded member 110 is formed of a fiber-reinforced polymeric matrix. The interior surface of threaded member 110 includes an integral thread having a rounded apex. The thread includes a reinforcing fabric layer which extends in the axial direction of internally threaded member 110 and conforms to the contour of the internal thread thereof.

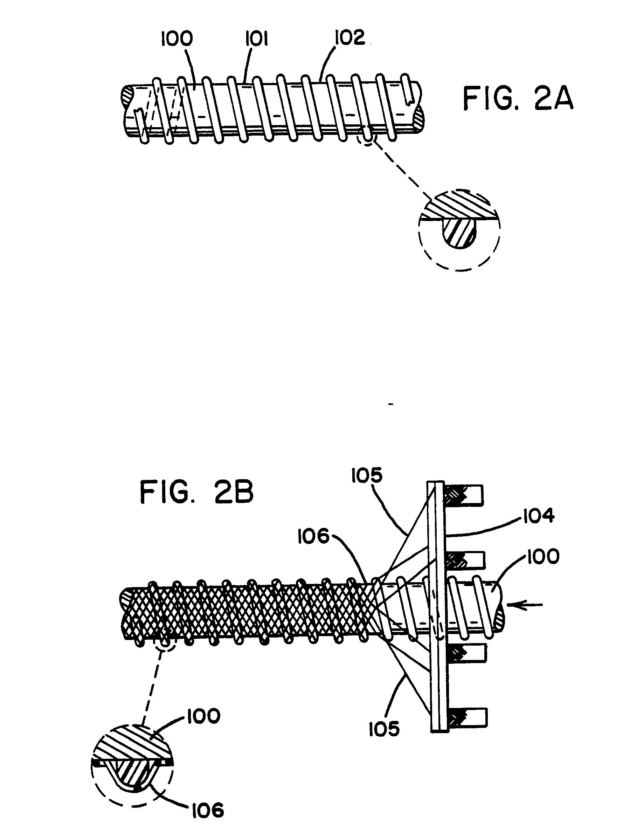

In Figure 2d there is shown an internally threaded member like that shown in Figure 2c, the difference being that the member 111 has been sliced from a greater axial length element such as member 110. The exterior axially extending surfaces of members 110 and 111 are cylindrical. Figure 2e shows a hexagonal internally threaded member or nut 112 which in other respects is like members 110 and 111. The interior surface 125 in member 110, 111, 112 includes a helical thread 126 extending in its lengthwise or axial direction. The reinforcing fabric layer is undulate and conforms to and extends throughout the contour of the threaded interior surface 125 of member 110, 111, 112. The reinforcing fabric layer is preferably a continuous tubular fabric layer formed in the manner shown in Figure 2b by braiding or knitting suitable high modulus textile fibers. Preferred are fibers of high Young's modulus such as those of aramid, glass and carbon.

In Figures 2f and 2g there is shown a composite bolt 120 according to the present invention which has been formed by threadedly joining a internally threaded member such as nut 112 to a separately formed externally threaded composite member 121 which may have been formed in the manner hereinafter described for externally threaded members 10, 50, 210, 250. Nut 112 is threaded on to threaded shank 121 and is bonded with adhesive 122 to prevent further rotation of nut 112 relative to shank 121. Bonding is accomplished with polymeric material such as epoxy or other matrix which is compatible with the matrices of nut 112 and shank 121.

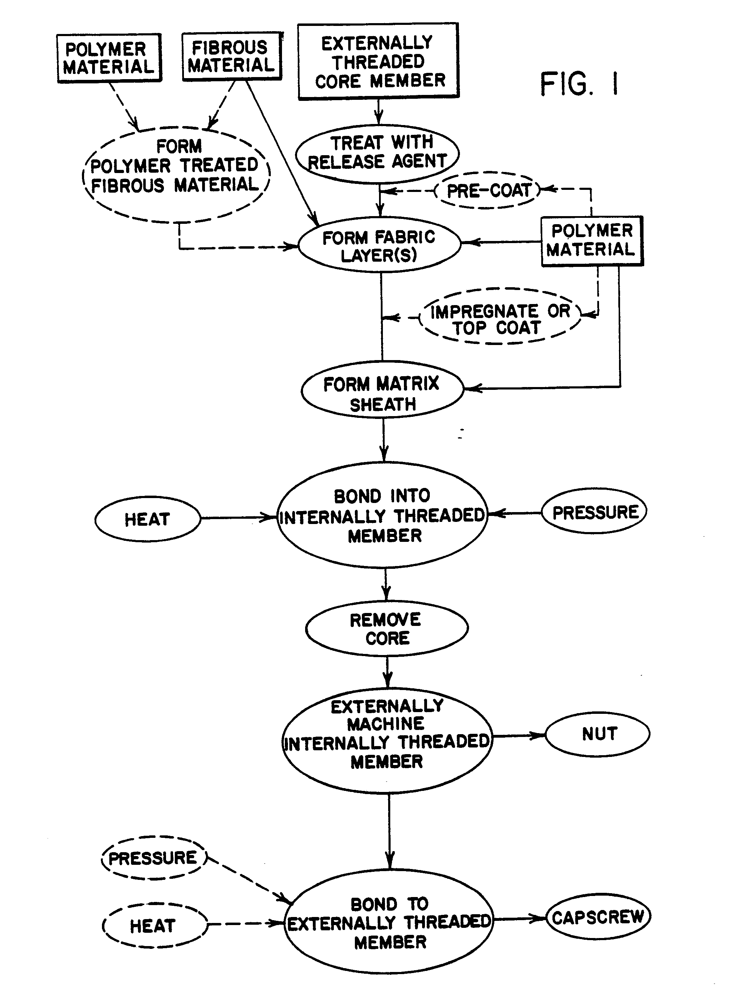

In Figure 1, there is shown a manner of manufacture according to the invention of an internally threaded member according to the present invention. An externally threaded cylindrical core such as core 100 depicted in Figure 2a is used as a carrier and mold for formation of an internally threaded member such as member 110 depicted in Figure 2c. Core 100 must include an exterior surface 101 which will not bond to the internally threaded member to be formed except where it is desired to form directly a threaded bolt or the like such as that depicted in Figure 2f. The externally threaded cylindrical core 100 is surface treated with release agent 102 as shown in Figure 1 and Figure 2a.

Thereafter, one or more reinforcing fabric layers are formed on core 100. This is preferably accomplished as shown in Figure 2b by passing core 100 through a tubular braiding or knitting machine or succession of such machines. Braiding or knitting machine 104 is provided with a plurality of carriers each letting off a continuous tow of fibrous material 105 which is laid up into a tubular reinforcing fabric layer 106 on core 100. The reinforcing fabric layer 106 envelopes and conforms to the contours defined by the helical threads of the outer surface 101 of core 100.

The reinforcing fabric layer 106 is multidirectional in character; it has fibrous elements which extend at differing angles relative to the axial direction of the internally threaded member being formed, at least some of the fibrous elements extending generally in the same direction as the helical threads and others of the fibrous elements extending generally in a direction opposite to that of the helical threads. In certain preferred embodiments, the internal thread of the hollow member is reinforced with closely spaced fibers which extend axially of the member in opposite sense helices.

A sheath or covering of polymeric matrix is applied to the combined externally threaded core and fabric layer 106. Polymeric material may be precoated onto the fibrous material 105. Such fibrous material 105 may alternatively be impregnated with polymeric material prior to or subsequent to conversion into fabric layer 106 on the core 100.

While the formation of a single reinforcing fabric layer 106 is depicted in Figure 2, a plurality of reinforcing fabric layers may be sequentially formed each upon the preceding underlying reinforcing fabric layer. Polymeric matrix material may be applied between application of each successive reinforcing fabric layer. Alternatively, polymeric material may be applied subsequent to application of all of the reinforcing fabric layers such as by pressure impregnation. When applied, the polymeric material, if a liquid, must be of sufficient viscosity to remain with the fibrous material and not drip off the combined internally threaded member being manufactured and its underlying core. To avoid the tendency of the liquid polymeric material to run due to influence of gravity, the core and internally threaded member being manufactured may be rotated about the horizontally oriented longitudinal axis of the core 100.

After application of the final polymeric material which encapsulates and forms a polymeric matrix sheath 108 upon the underlying reinforcing fabric layer such as 106, the assembly is preferably subjected to heat and pressure to consolidate and bond the polymeric matrix and the fabric layers into a unitary, stable, internally threaded composite member such as member 110 shown in Figure 2c. This may be conveniently accomplished in an ordinary autoclave when thermosettable polymeric resins are employed. Autoclaving may also be employed with thermoplastic polymeric resins. No external mold is required.

When room temperature chemically setting resins are employed, it is possible to manufacture internally threaded members according to the invention without application of heat or pressure.

Subsequent to the bonding operation, the combined internally threaded member and its core are removed from the autoclave, thereafter the newly formed internally threaded member 110 is removed from core 100 by rotating member 110 relative to core 100. As shown in Figure 2c, core 100 has been partially withdrawn from the right hand portion of internally threaded member 110. The previously applied release agent 101 facilitates separation of internally threaded member 110 from core 100.

Preferably, internally threaded member 110 is made of sufficient axial length such that it may be cut into a plurality of smaller internally threaded members such as internally threaded member 111 shown in Figure 2d. The exterior cylindrical surface 127 of member 111 may be machined to form a hexagonal outer surface 128 such as that shown for member 112 in Figures 2e, 2f and 2g. It is also possible to machine the exterior surface of internally threaded member 110 prior to slicing it into a plurality of hex nuts such as nut 112 shown in Figure 2e. Hex nut 112 includes a continuous helical thread 126 extending in the axial direction of nut 112 within its central aperture. Internal helical thread 126 is reinforced by reinforcing fabric layer 106 which conforms to the contour defined by external helical thread of core 100. As shown in Figure 2g, nut 112 includes a plurality of coaxial fabric reinforcing layers 129 distributed throughout its cross-sectional area.

Nut 112 may be threadedly joined to an externally threaded composite member such as shank 121 shown in Figure 2f and Figure 2g. Nut 112 is bonded to shank 121 with polymeric material 122 such as an epoxy adhesive to form composite bolt 120.

It is also possible to utilize resin materials which may be B-staged. Polyesters and epoxies are examples of such resins. In this instance an optional process for formation of items such as bolt 120 depicted in Figures 2f and 2g includes only B-staging the internally and externally threaded members such as the nut and shank prior to threadedly joining them and thereafter applying heat and pressure to consolidate the internally threaded member to the shank and effect a chemical bond therebetween.

Selection of the resin and fabric materials for nut 112 and shank 121 is based primarily on intended end use according to the in-service properties required for the intended application. In low temperature and low stress applications, it is adequate to utilize a shank formed of extruded thermoplastic such as, by way of example and without limitation, nylon. Where greater strength is desired or necessary, the polymer matrix may be filled with discontinuous or continuous fibers. Crystalline polymers are generally more resistant to creep than non-crystalline polymers. Where greatest strength and resistance to creep are desired, the core is preferably formed of thermosettable polymeric matrix which is reinforced with continuous fibers which extend in the axial, that is the lengthwise direction of shank 121. Suitable resins include, by way of example and without limitation, nylons (polyamides), polyesters, polyolefins, polyaroline sulfides (pps), epoxies, polyimides, and the like. Suitable fibers include, by way of example and without limitation, glass, aramid, ceramic fibers and whiskers, and carbon fibers, and the like, including combinations thereof. The fibers of the nut and shank should have a Young's modulus greater than that of the polymeric matrix in which they are embedded.

A particularly suitable shank for applications where high modulus and strength and temperature are desired is a rod formed of glass fiber or carbon fiber in a polyphenylene sulfide matrix which rods are available under the trademark RYTON PPS from Phillips Petroleum Company, Bartlesville, Oklahoma.

Preferred are fibers of high Young's modulus such as those of aramid, glass and carbon. The fibers may be treated to enhance adhesion to the polymeric resin. Such treatment is not within the scope of the present invention but is well known to those skilled in the manufacture of fibers for reinforcement of composites.

The fibrous material tow 105 which is utilized to form the reinforcing fabric layer 106 may itself be formed of a plurality of sub-elements such as filaments of generally rounded cross-sectional configuration. The filaments may be incapsulated with polymeric matrix. The filaments may be twisted together into a yarn. A plurality of may be twisted into a cord. A plurality of cords may be twisted to form a larger continuous fibrous material element. Fibrous material 105 may be of flattened or rounded cross-sectional configuration and may be twisted or untwisted or braided. Preferably, either fibrous material tows 105 are impregnated prior to forming into reinforcing fabric layer 106 or are laid onto a previously applied layer of polymeric material, preferably liquid polymeric material which wets the fibers and encapsulates them.

Due to the character of the reinforcing fabric layer 106 and the fact that it is undulate and thus closely conforms to the male pattern provided by the threaded core 100, the internal threads of female member 110 and those derived therefrom are reinforced against rupture. Due to the multi-directional character of the filaments of the reinforcing fabric layer, at least some of the filaments of the textile reinforcing material are oriented in planes at a considerable angle to the plane of the shearing forces acting on the internal threads of member 110.

Resins which set by chemical action alone without application of heat may also be employed. The resin employed in the manufacture of the internally threaded member such as nut 112 which is to be joined with a composite shank such as 121 to form a bolt or capscrew 120 is selected so as to be compatible with the resin employed in the manufacture of such shank.

## EXTERNALLY THREADED MEMBERS AND THEIR MANUFACTURE

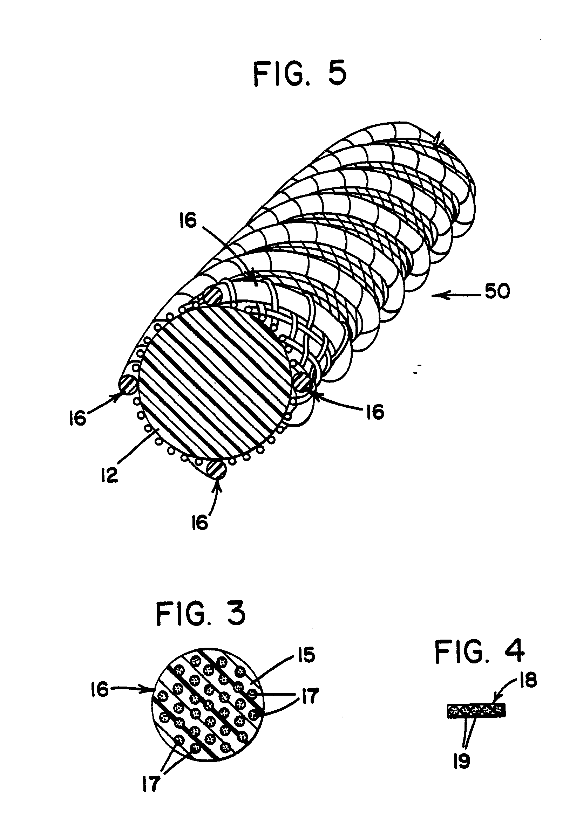

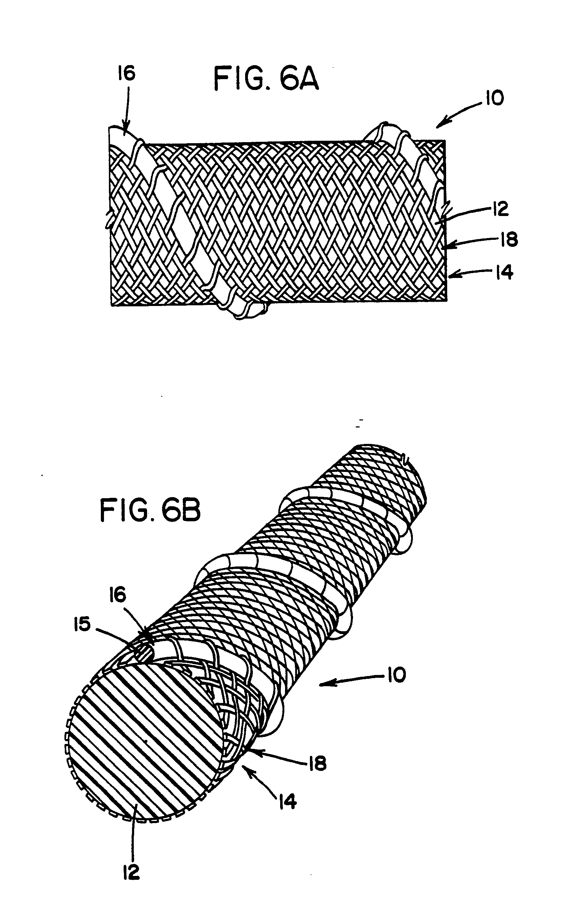

In Figures 6A and 6B, there is shown an embodiment of a threaded member 10 according to the present invention. Threaded member 10 includes an elongate core 12 and a tubular braided layer 14 which is bonded to the exterior surface of the core 12. In certain preferred embodiments braided layer 14 is embedded in a matrix (not shown). Braided layer 14 includes a thread-defining element 16 which extends in helical fashion around and along the exterior cylindrical surface of core 12. Thread-defining element 16 is also an integral part of tubular braided layer 14. Thread-defining element 16 as individually illustrated in Figure 3 is of greater radial projection than that of the other non thread-defining elements 18, one of which is illustrated in Figure 4, which form together with element 16 the tubular braided layer 14.

For a thread-defining element of a given size, the helix angle of the thread(s) varies directly with the size of the core. For a core of a given diameter, the helix angle of the thread-defining element varies inversely with the size of the thread-defining element. Helix angle of the thread-defining element(s) will generally range between 50 and slightly less than 90 degress. The helix angle selected will be based on the materials employed in the manufacture of the fastener, the packing density of the fastener and the design requirements of the intended application for the fastener.

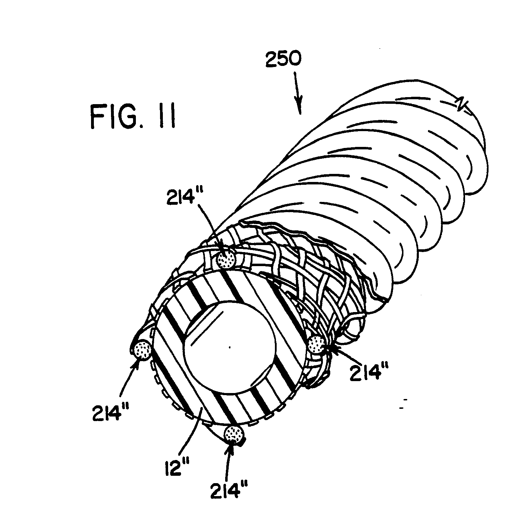

The core 12 is a rod and is preferably cylindrical although other cross-sectional configurations may be used such as hexagonal and those polygons having a greater number of sides or oval. The core 12 may be solid as illustrated in Figures 5, 6 and 8 or hollow as illustrated in Figure 11 by reference numeral 12″. Selection of the core is based primarily on intended end use according to the in-service properties required for such application. In low temperature and low stress applications, it is adequate to utilize a core formed of extruded thermoplastic such as, by way of example and without limitation, nylon. Where greater strength is desired or necessary, the polymer matrix may be filled with discontinuous or continuous fibers. Crystalline polymers are generally more resistant to creep than non-crystalline polymers. Where greatest strength and resistance to creep are desired, the core is preferably formed of a thermosettable polymeric matrix which is reinforced with continuous fibers which extend in the axial, that is, the lengthwise direction of the core. Suitable resins include, by way of example and without limitation, nylons (polyamides), polyesters, polyolefins, polyarylene sulfides (PPS), epoxies, polyimides, and the like. Suitable fibers include, by way of example and without limitation, glass, aramid, ceramic fibers and whiskers, and carbon fibers, and the like including combinations thereof. The fibers of the core should have a Young's modulus greater than that of the polymeric matrix in which they are embedded.

A particularly suitable core for applications where high modulus and strength and temperature are desired is a rod formed of glass fiber or carbon fiber in a polyphenylene sulfide matrix, which rods are available under the trademark Rytone PPS from Phillips Petroleum Company, Bartlesville, Oklahoma.

Thread-defining element 16 may be formed of any suitable fiber including those listed above in regard to the core 12. Preferred are fibers of high Young's modulus such as those of aramid, glass and carbon. The fibers may be treated to enhance adhesion to the polymeric resin. Such treatment is not within the scope of the present invention but is well known to those skilled in the manufacture of fibers for reinforcement of composites.

As shown in Figure 3, the thread-defining element 16 may itself be formed of a plurality of sub-elements 17 such as filaments of generally rounded cross-sectional configuration. The filaments 17 may be encapsulated with polymeric matrix 15. The filaments 17 may be twisted together into a yarn. A plurality of yarns may be twisted into a cord. A plurality of cords may be twisted to form a larger thread-defining element. A plurality of bundles of filaments or a plurality of yarns or a plurality of cords may themselves be braided to form a thread-defining element. A strip of material may be twisted to form thread-defining element 16 or sub-element 17. The thread-defining element 16 should be resistant to deformation from its rounded cross-sectional configuration to ensure that element 16 projects radially outwardly from core 12 an amount greater than the remainder of the elements 18 of the braided layer 14. In certain preferred embodiments element 16 is of circular cross-sectional configuration and resistant to deformation from such cross-sectional configuration as it is braided onto core 12. This may be achieved by forming element 16 of tightly compacted fibers and/or pre-impregnating the sub-elements 17 with a polymeric resin to form a solid circular bundle.

As shown in Figure 4, the non thread-defining elements 18 of braided layer 14 are preferably of flattened cross-sectional configuration. The non-thread-defining elements 18 may be formed of any suitable fiber twisted or untwisted, formed into yarn or cord or braided into a flattened strip. The non-thread-defining elements may be impregnated in polymeric resin prior to forming braided layer 14. As shown, a plurality of filamentary parts sub-parts 19 are positioned side-by-side in non-thread-defining element 18.

In Figure 5, there is shown an alternate embodiment of a threaded member 50 according to the present invention. Threaded member 50 differs from that depicted in Figure 1 in that it includes a plurality of thread-defining elements 16, each of which extends helically along core 12. Threaded member 50 retains a significant portion of its holding power in the event that one or more of its thread-defining elements 16 are damaged or broken. While four thread-defining elements 16 are illustrated, a greater or lesser number could be employed.

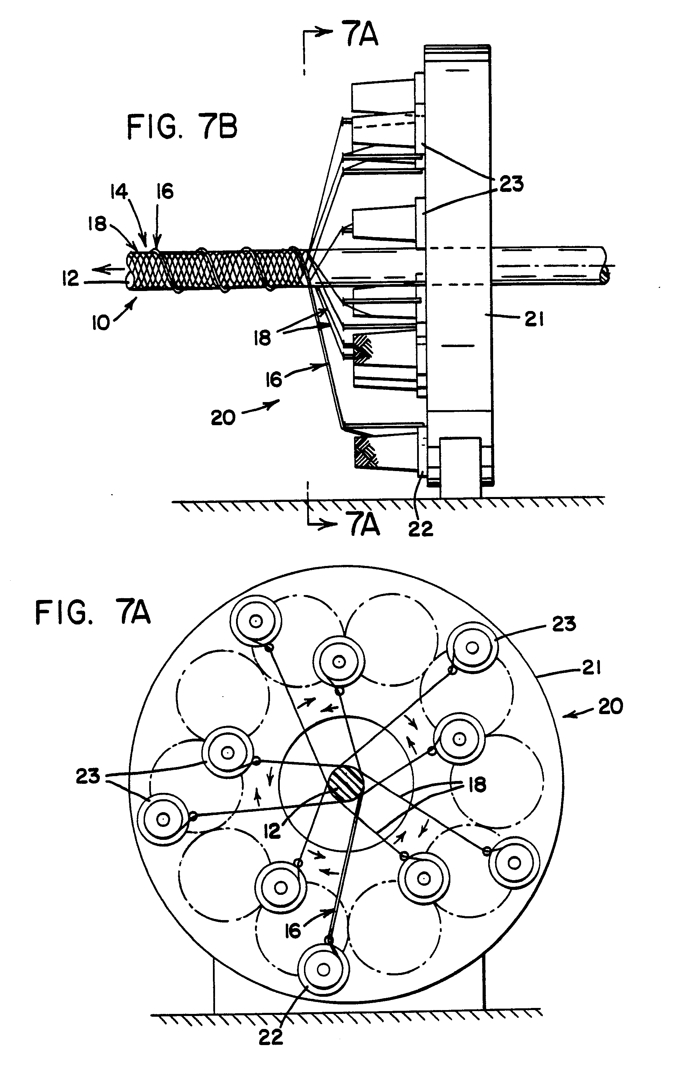

A portion of the manufacturing process for the present externally threaded members is illustrated in Figures 7A and 7B. A conventional tubular braiding apparatus 20 contains a desired number of yarn or cord carriers in its deck 21. The number of carriers is not critical. The number of carriers needed for complete coverage of the surface of the core increases with the size of the core in a manner well known to those skilled in the art of tubular braiding. For fasteners of up to about 1" (2.54 cm) diameter, commonly available 24 to 36 unit single deck braiding machines may be employed to obtain full coverage of the core 12 with braided layer 14. According to the present invention, one or more selected carriers 22 are fitted with a spool of thread-defining element 16, one being shown in Figures 2A and B for simplicity of illustration. The remainder of the carriers 23 are fitted with spools of non thread-defining element 18, like those shown in Figure 4. As core member 12 is passed through the deck 21 of braider 20, the reinforcements 16 and 18 are braided on to the core. As a result of the braiding action, the thread-defining element 16 is secured to core 12 by a plurality of non thread-defining elements 18 which envelop the core 12 in an opposite sense helical pattern from that of thread-defining element 16. Viewed from the perspective of one traveling along the helical path of the thread-defining element 16 upon core 12, thread-defining element 16 is at some points overlapped by non thread-defining elements 18 and at other points non thread-defining elements 18 pass between thread-defining elements 16 and the core 12. In this manner the thread(s) of the externally threaded composite member are reinforced with fibers which extend across the direction of the thread(s) as well as with fibers which extend in the direction of the thread(s). The outer cylindrical surface of core 12 may be coated with or formed of a thermoplastic or thermosettable polymer. The surface of the core may be heated to promote embedment and bonding of elements 16 and 18 to the core. A liquid bonding polymeric resin may be applied to the core prior to or subsequent to the core being passed through the braider.

In certain preferred embodiments, the thread-defining element(s) 16 and non-thread-defining elements 18 are impregnated with resin. In other preferred embodiments elements 16 and 18 are coated with resin.

Preferably the elements of the braided layer are arranged in the tubular braided layer such that the braided layer is stable against rotation when a tensile load is applied in the lengthwise direction of the core. In other words, a torque is not generated when a tensile load is so applied.

After the braiding operation the composite member may be consolidated by application of heat and pressure, for example, in an autoclave. Preferably additional resin is applied subsequent to braiding to coat and protect the braided layer against abrasion and to promote bonding of the braided layer to the core. A distinct abrasion resistant layer of resin may be applied subsequent to banding of the braided layer.

Resins which set by chemical action alone without application of heat may also be employed. The resins employed in the manufacture of the core, impregnation of the thread-defining elements, the non-thread-defining elements, and bonding and coating of the braided layer are selected so as to be compatible with one another.

Although the invention has been described with reference to its preferred embodiments, other embodiments can achieve similar results. Variations and modifications of the present invention will be obvious to those skilled in the art and it is intended to cover in the appended claims all such modifications and equivalents.

## ALTERNATE EMBODIMENTS OF EXTERNALLY THREADED MEMBER

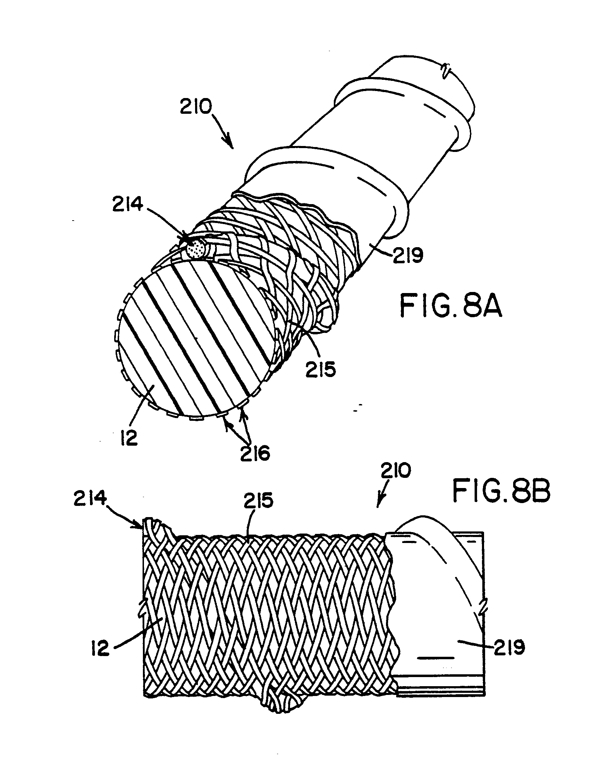

In Figures 8A and 8B, there is shown an embodiment of a threaded member 210 according to the present invention. Threaded member 210 includes an elongate core 12, a thread-defining element 214 which extends in helical fashion around and along the exterior cylindrical surface of core 12 and a reinforcing fabric layer such as braided layer 215 which envelops, conforms to and is bonded to the outer surface of the combined core 12 and thread-defining element 214. Thread-defining element 214 is of greater radial projection than that of the other non-thread-defining elements such as flat bundle braiding elements 216, which are formed into tubular braided fabric layer 215. Preferably the thread-defining element 214 is integral with or bonded to the core 12. In certain preferred embodiments, thread-defining element is as shown and described in reference to Figure 3. Flat bundle braiding elements 216 may be as shown and described in reference to Figure 4.

The core may include a layer of braided or knit fabric or at least two layers of opposite sense helical fibrous reinforcements to render the core resistant to torsional loading or fibrous reinforcements which extend in lengthwise, that is, the axial direction of the core.

Thread-defining element 214, 214″ may be formed of any suitable fiber including those listed above in regard to the cores 12 and 12″. Preferred are fibers of high Young's modulus such as those of aramid, glass and carbon. The fibers may be treated to enhance adhesion to the polymeric resin. Such treatment is not within the scope of the present invention but is well known to those skilled in the manufacture of fibers for reinforcement of composites.

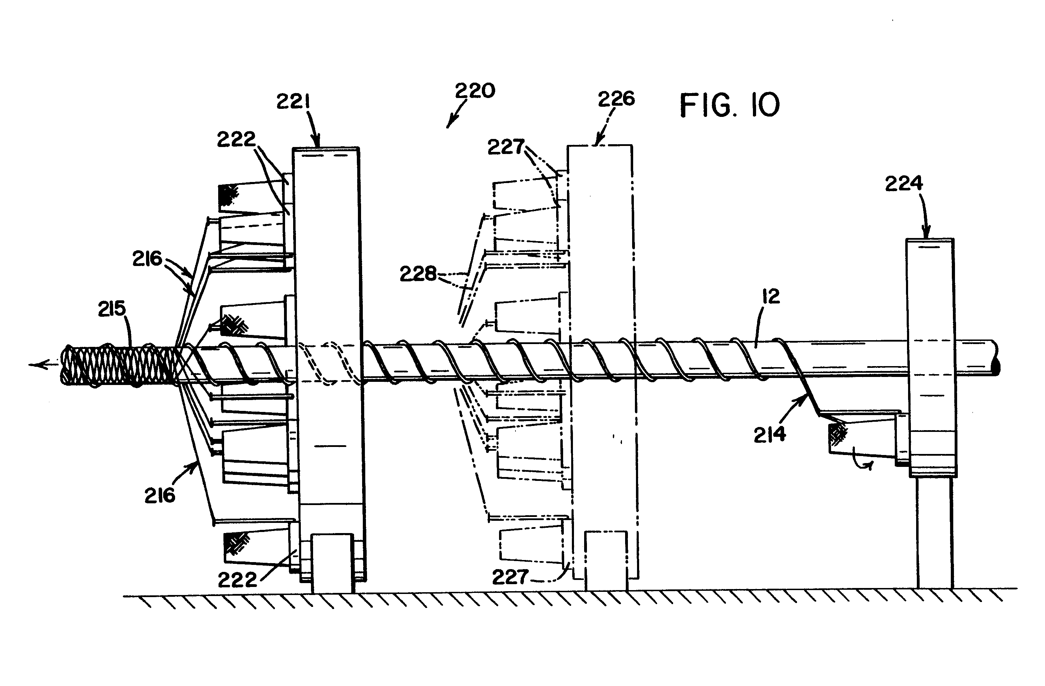

The thread-defining element 214 may be integrally formed with core 12 or may be helically applied to core 12 by a spiral wrapping machine 224 as shown in Figure 10. Thread-defining element 12 may be polymer alone, fiber alone or a combination of polymer and fiber. Thread-defining element may be short fibers or continuous fibers in a polymer matrix. The thread-defining element 214 may itself be formed of a plurality of sub-elements such as filaments of generally rounded cross-sectional configuration. The filaments may be encapsulated with polymeric matrix. The filaments may be twisted together into a yarn. A plurality of yarns may be twisted into a cord. A plurality of cords may be twisted to form a larger thread-defining element. A plurality of bundles of filaments or a plurality of yarns or a plurality of cords may themselves be braided to form a thread-defining element. A strip of material may be twisted to form thread-defining element or sub-element. The thread-defining element 214 should be resistant to deformation from its rounded cross-sectional configuration to ensure that element 214 projects radially outwardly from core 12 and influences the contour of the fabric layer formed thereover. In certain preferred embodiments element 214 is of circular cross-sectional configuration and resistant to deformation from such cross-sectional configuration as it is spirally wrapped onto core 12. In certain preferred embodiments this is achieved by forming element 214 of tightly compacted fibers and/or pre-impregnating the sub-elements 17 with a polymeric resin 15 to form a solid circular bundle.

As shown in Figure 8A, the flat bundle braiding elements 216 of braided fabric layer 215 are preferably of flattened cross-sectional configuration. These flat bundle elements 216 may be as shown and described with reference to Figure 4.

In Figure 11, there is shown an alternate embodiment of a threaded member 250 according to the present invention. Threaded member 250 differs from that depicted in Figures 8A and 8B in that it includes a plurality of thread-defining elements 214″, each of which extends helically along hollow core 12″. Threaded member 250 retains a significant portion of its holding power in the event that one or more of its thread-defining elements 214″ are damaged or broken. While four thread-defining elements 214″ are illustrated, a greater or lesser number could be employed. Each of thread-defining elements 214″ is formed of short fibers in a polymer matrix.

A portion of the manufacturing process for the certain embodiments of threaded members according to the present invention is illustrated in Figure 10. Apparatus 220 contains in functional sequence a spiral wrap machine 224 and a fabric layer forming machine such as braider deck 221 shown in solid lines or knitting machine 226 shown in dashed lines. Braider deck 221 is conventional and includes a desired number of yarn or cord carriers 222. The number of carriers is not critical. The number of carriers needed for complete coverage of the surface of the core 12 increases with the size of the core in a manner well known to those skilled in the art of tubular braiding. For fasteners of up to about 1" (2.54 cm) diameter, commonly available 24 to 36 carrier single deck braiding machines may be employed to obtain full coverage of the core 12 with braided layer 214. Each of carriers 222 is fitted with a spool of continuous non-thread-defining element, such as flat bundle element 216 like those shown in Figure 8A. As core member 12 is passed through apparatus 220, thread-defining helical element 214 is spirally wrapped onto the core 12 by spiral wrap machine 224 and thereafter a reinforcing fabric layer 215 is formed by braider deck 221 which braids the braiding elements 216 on to the spiral wrapped core. The thread-defining element 214 is bonded to the core 12 with polymeric resin. The thread-defining element 214 is also secured to core 12 by a plurality of non-thread-defining elements 216 which envelop the combined core 12 and helically extending thread-defining element 214 in the same and in opposite sense helical patterns from that of thread-defining element 214. Thread-defining element 214 is overlapped by non-thread-defining elements 216 of fabric layer 215. Fabric layer 215 closely conforms to and follows the outer surface contours of the combined core 12 and thread-defining helical element 214.

Still having reference to Figure 10, there is shown in dashed lines an alternate means for forming a reinforcing layer which overlies and closely conforms to the spirally wrapped core. The combined core 12 and helical thread-defining element 214 may be passed through knitting machine 226 which forms a tubular knit reinforcing fabric from yarns 228 provided on carriers 227.

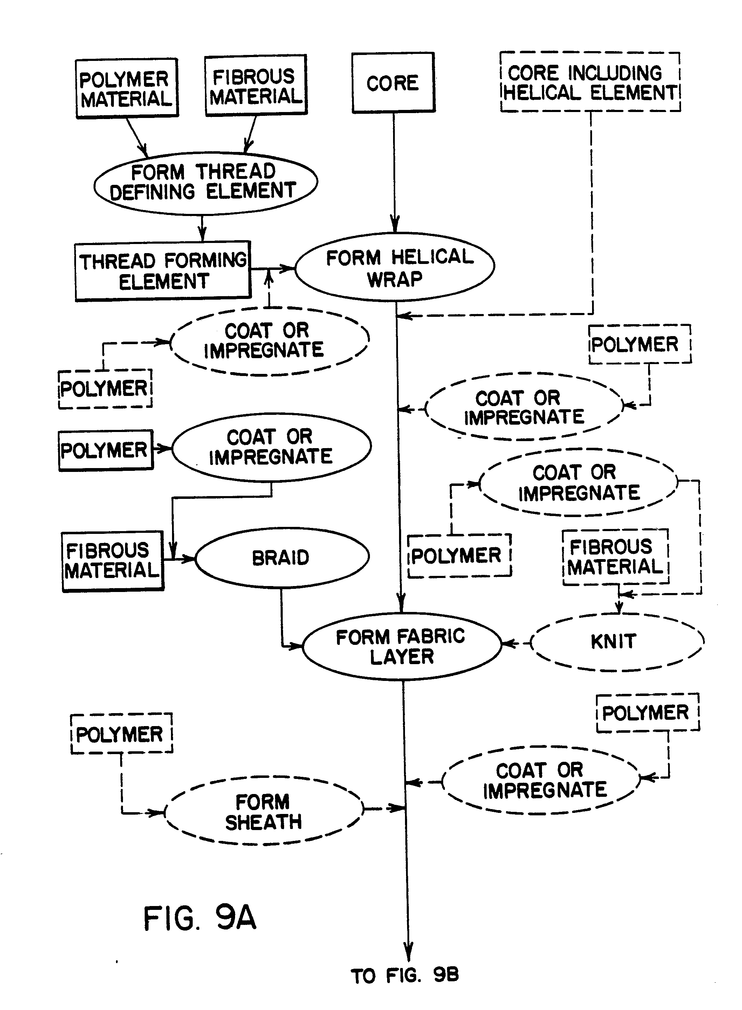

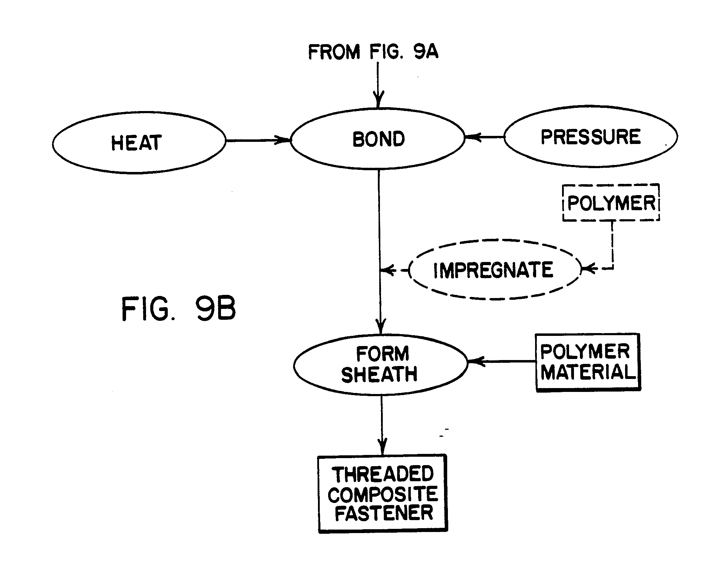

Figure 9 schematically depicts processes for manufacture of composite threaded members according to the present invention. The core, as previously discussed, may or may not include a helical thread-defining element at the start of the process. If no helical thread-defining element is present on the core, one is applied for example and without limitation by spiral wrapping or extrusion. The thread-defining element may be formed of polymer material alone, fibrous material alone or a combination of polymer and fibrous materials. The thread-defining element may be polymer resin coated or impregnated prior to and/or subsequent to its application to the core.

The outer cylindrical surface of core may be coated with or formed of a thermoplastic or thermosettable polymer. The surface of the core may be heated to promote embedding and bonding of the helical thread-defining element and fabric layer to the core. A liquid bonding polymeric resin may be applied to the core prior to or subsequent to the core being passed through the spiral wrap machine and the fabric layer forming apparatus. Over the combined core and thread-defining helically extending element there is formed a layer of reinforcing fabric, preferably by braiding or knitting. Fibrous material used in forming the reinforcing fabric layer may be coated or impregnated with polymer prior to use to aid in bonding the fibrous material to the combined core and thread-defining element. The combined core, thread-defining element and fabric layer are secured to one another, preferably by chemical bonding.

Preferably the fibrous elements forming the reinforcing fabric layer are arranged in the tubular fabric layer such that the fabric layer is stable against rotation when a tensile load is applied in the lengthwise direction of the core. In other words, a torque is not generated which tends to rotate the core when a tensile load is so applied.

After the formation of the reinforcing fabric layer, the composite member may be consolidated by application of heat and pressure, for example, in an autoclave. This consolidation step forces the reinforcing fabric to more closely conform to the contours defined by the underlying combined core and thread-defining element. Preferably additional polymeric resin is applied subsequent to formation of the fabric layer to form a sheath which coats and protects the underlying structure layer against abrasion and to promote bonding of the braided layer to the core. Multiple applications of polymer resin may be employed to build up a protective sheath. A distinctly different resin selected primarily for its abrasion resistance may be applied subsequent to bonding of the reinforcing fabric layer.

Polymer resins which set by chemical action at room temperature without application of heat may be employed. The polymeric resins employed in the manufacture of the core, manufacture and impregnation of the thread-defining elements, the fibrous material used in forming the reinforcing fabric layer, and impregnating, bonding and coating of the fabric layer are selected so as to be compatible with one another.

Although the invention has been described with reference to its preferred embodiments, other embodiments can achieve similar results. Variations and modifications of the present invention will be obvious to those skilled in the art and it is intended to cover in the appended claims all such modifications and equivalents.

**Claims**

1. A method of making a hollow composite internally threaded member comprising:
providing an elongate externally threaded cylindrical core, which is treated with a release agent;
forming on the core a reinforcing fabric layer enveloping the core and conforming to the threads of the core;
embedding the reinforcing fabric layer in a stable polymeric matrix; and thereafter rotatably removing the core.

2. The method of claim 1 wherein the reinforcing fabric layer is formed of a polymer resin impregnated tow.

3. The method of claim 1 or 2 wherein the fabric layer is braided or knitted onto the core.

4. The method of any of claims 1 through 3 wherein a plurality of fabric layers are successively formed each upon the preceding one another and embedded in a polymeric matrix.

5. The method of claim 1 further including forming a multidirectional reinforcing fabric layer having a first portion of its fibrous elements extending helically of the axis of said member in a first sense and a second portion of its fibrous elements extending helically of the axis of said member in the opposite sense of said first portion.

6. The method of any of claims 1 through 5 further comprising applying heat and pressure in the absence of a mold to the combined reinforcing fabric layer and polymeric matrix while on the core.

7. The method of any of claims 1 through 6 wherein the polymeric matrix comprises a thermosettable polymer.

8. The method of any of claims 1 through 7 further comprising, providing an externally threaded member having a thread pitch and thread diameter complementary to those of the internally threaded member, rotatably joining and chemically bonding the internally threaded member and the externally threaded member.

9. The method of claim 8 wherein liquid polymeric material is used to effect chemical bonding.

10. A hollow internally threaded member formed of fibers in a polymer matrix, said member having an interior surface having an integral thread having a rounded apex, said thread including a reinforcing fabric layer extending in the axial direction of the member and conforming to the threads, wherein the reinforcing fabric layer is one of tubular braided fabric and tubular knit fabric.

11. The hollow member of claim 10 wherein the thread is reinforced with closely spaced fibers which extend axially of the member in opposite sense helices.

12. The hollow member of any of claims 10 or 11 including a plurality of layers of reinforcing fabric distributed throughout.

13. A hollow internally threaded member having an integral thread having a rounded apex, the member comprising a polymeric matrix encapsulating a plurality of successively applied coaxial reinforcing fabric layers extending throughout the member in the axial direction of the member, the innermost layer of reinforcing fabric having continuous undulate members closely conforming to the contour of the thread.

14. In combination, the hollow member of any of claims 10 through 13 threadedly joined to an externally threaded member of complementary thread pitch and thread diameter.

15. The combination of claim 14 wherein the hollow member and externally threaded member are together bonded by polymeric material.

16. The combination of claim 14 or 15 wherein the externally threaded member comprises an elongate core and an integral tubular braided layer bonded to the exterior surface of the core, the braided layer including at least one element of greater radial projection defining the helical thread appearing on the exterior surface of the core.

17. The combination of claim 14 or 15 wherein the externally threaded member comprises a fiber-reinforced polymeric rod having a thread-defining element helically extending around and along the lengthwise direction of the core and projecting radially outwardly of the core, and a fabric layer enveloping, conforming and secured to the outer surface of te combined core and thread-defining element.

18. The combination of claim 14 or 15 wherein the externally threaded member comprises a polymeric rod having reinforcing textile fibers of at least one of carbon fibers, glass fibers and aramid fibers extending throughout in the lengthwise direction of the rod, said rod having its thread reinforced by a continuous textile fabric layer enveloping, conforming and bonded with a polymeric matrix to the polymeric rod.

FIG. 1

FIG. 2A

FIG. 2B

FIG. 2C

110

108

125

FIG. 2D

111

127

125

125

126

FIG. 2E

112

120

2G

120

FIG. 2F

112

128

121

2G

FIG. 2G

128

120

121

112

129

112

120

121

128

FABRIC LAYERS 129

121

122

112

120

128

121

FIG. 2H

# FIG. 5

16

50

16

16

12

16

# FIG. 3

15

16

17

17

# FIG. 4

18

19

FIG. 6A

FIG. 6B

FIG. 7B

FIG. 7A

210

214

219

**FIG.8A**

215

12

216

210

**FIG.8B**

214

215

12

219

FIG. 9A

TO FIG. 9B

FROM FIG. 9A

HEAT → BOND ← PRESSURE

POLYMER

IMPREGNATE

FIG. 9B

FORM SHEATH ← POLYMER MATERIAL

THREADED COMPOSITE FASTENER

FIG. 10

EP 0 373 642 A2

FIG. II

250

214"

214"

214"

12"

214"

214"